# EUROPÄISCHE PATENTSCHRIFT

(11) **EP 0 463 195 B1**
(45) Veröffentlichungstag und Bekanntmachung des Hinweises auf die Patenterteilung: **15.12.1993**
(21) Anmeldenummer: 90111970.1
(22) Anmeldetag: 23.06.1990
(51) Int. Cl.: B01D 36/04, C02F 1/52

(54) **Transportable Vorrichtung zur Reinigung von Abwässern jeglicher Art**
Movable device for the purification of all kinds of sewage
Dispositif transportable de purification d'eaux résiduelles de toutes sortes

(43) Veröffentlichungstag der Anmeldung: 02.01.1992
(73) Patentinhaber: Ralf F. Piepho Abwassertechnik GmbH, 30974 Wennigsen (DE)
(72) Erfinder: Piepho, Ralf F., D-3015 Wennigsen 5 (DE)
(74) Vertreter: Rücker, Wolfgang

(56) Entgegenhaltungen:
- DE-A- 1 817 140
- DE-A- 2 324 056
- DE-A- 2 409 269
- DE-A- 3 124 738
- DE-A- 3 707 781
- DE-C- 1 126 360
- FR-A- 2 439 036

## Beschreibung

Die Erfindung betrifft eine transportable Vorrichtung zur Reinigung von Abwässern jedwelcher Art, von verbrauchten Emulsionen und dergleichen, in der das Abwasser in einem Behälter mit einem als Trennmittel wirkenden Gemenge chemischer Stoffe versetzt und innig vermischt wird, darauf der sich bildende Niederschlag über ein Bandfilter abgetrennt und das Filtrat gesammelt wird.

Vorrichtungen dieser Art sind an sich bekannt, beispielsweise aus der DE-A-31 24 738. Dort sind Reaktionsbehälter vorgesehen, die seitlich von einem Absetzbehälter angeordnet sind, aus dem dann die Flüssigkeit auf ein unter den Behältern angeordnetes Bandfilter abgelassen wird, während das Sediment, welches sich im unteren Teil des Absetzbehälters sammelt, vermittels eines Zellenbandes ausgetragen wird und über eine Schrägfläche auf das Bandfilter rutscht.

Das Bandfilter ist ebenfalls ein Zellenband, das auf seinem oberen Trum ein bahnförmiges Faservlies trägt, das wie ein Filter die Flüssigkeit von den Feststoffen trennt.

Diese Vorrichtung, obwohl in ihrer Funktion außerordentlich wirksam, hat jedoch besonders dann, wenn kleinere Mengen Abwässer mit darin emulgierten, organischen Stoffen und Verbindungen gereinigt werden sollen, den Nachteil, daß sie zu aufwendig ist und zuviel Platz benötigt wegen der mehrfachen Einrichtungen zur Handhabung des Sediments, zur Filtration des Abwassers nach Einleitung des Trennmittels, die Führung des Abwassers aus dem oder den Reaktionsbehälter(n) in den Absetzbehälter, durch die Anordnung von Ventilen und Rohrleitungen zur Führung des Abwassers usw. und ist daher auch relativ wartungsintensiv.

Aufgabe der vorliegenden Erfindung ist es nun, eine Vorrichtung der eingangs genannten Art zu schaffen, die weniger Platz benötigt, außer einem hohen Wirkungsgrad auch in der Wartung weniger aufwendig ist und in ihrer Reinigungskapazität variabel und anpaßbar ist.

Gelöst wird diese Aufgabe dadurch, daß sie einen schwenkbar gelagerten Behälter umfaßt, der sowohl Reaktions- als auch Sedimentationsbehälter ist, und der seinen Inhalt direkt auf das darunterliegende Bandfilter dekantiert.

Der Behälter ist vorzugsweise halbzylindrisch mit halbkreisförmigen Seitenwänden und halbzylindrischem Boden und ist an einer Achse befestigt, die motorisch gedreht wird und die durch den Mittelpunkt des Durchmessers des Kreises verläuft, dessen Hälften die Wände des Behälters bilden. Der halbzylindrische Boden des halbzylindrischen Behälters ist vorzugsweise so ausgestaltet, daß er V-förmige Gestalt hat, wobei der Scheitel des V'es auf der Mittellinie der halbzylindrischen Wand des Behälterbodens verläuft.

Der Behälter kann auch eine andere Form oder Gestalt als halbzylindrisch haben, beispielsweise trapezförmig oder dreieckig oder rechteckig mit beidseitig gleichmäßig schrägverlaufenden Außenwänden und zylindrisch gewölbtem Boden oder dergleichen.

Durch die V-förmige Bodengestaltung entsteht eine Ausgußtülle, die beim Verschwenken des Behälters den Inhalt desselben auf die Mitte des darunterliegenden Bandfilters leitet.

Der halbzylindrische Behälter lagert in einem entsprechend gestalteten Maschinengestell, in der der obere Rand des Behälters, der mit dem Durchmesser zusammenfällt, horizontal liegt. In dieser Stellung ragt in den Behälterinnenraum hinein ein Rührwerk und der Zuführungsschacht des von einer Dosiervorrichtung zugeteilten Reaktionstrennmittels.

Das Rührwerk, bestehend aus Antriebsmotor und Propeller, ist auf einer Traverse oberhalb des halbzylindrischen Behälters so angeordnet, daß der Behälter zur Entleerung seines Inhalts unter dem Rührwerk und unter dem Zuführungsschacht für das Trennmittel herausschwenkt, so daß sich also Behälter und die anderen betrieblichen Teile beim Dekantieren des Behälters durch Verschwenken nicht stören.

Das Bandfilter entspricht im wesentlichen dem Bandfilter bekannter Konstruktion. Es besteht aus einem endlosen Zellenband, aus schwenkbar miteinander verbundenen, mäanderförmigen Blechstreifen, das über Rollen so angetrieben, geführt und in Bewegung gesetzt wird. Es trägt auf seiner Oberseite das Faservlies, welches die Funktion eines Filters hat, welches wiederum von einer Vorratsrolle an dem linken Ende der Maschine abgezogen und am rechten Ende abgeworfen wird. Das Rührwerk mit dem Propeller und dem Antriebsmotor ist ebenfalls bekannt und ebenso die Dosiervorrichtung für das chemische Trennmittel. Außerdem ist erfindungsgemäß ein Abstreifer verstellbar und elastisch gelagert, der etwa radial in den halbzylindrischen Behälter hineinragt und mit einer Schiene mit gummielastischer Lippe den V-förmigen Boden des Behälters beim Verschwenken desselben überstreicht und damit reinigt. Die Verschwenkung des Behälters geht vorzugsweise über einen solchen Winkelbereich, daß der Abstreifer die gesamte Bodenfläche abstreift und damit eine vollständige Entleerung des Behälters eintritt.

Es sei nunmehr erwähnt, daß die Bewegungen sowohl des Bandfilters als auch die Schwenkbewegung des Behälters sehr langsam vonstatten gehen und zwar entweder schrittweise oder kontinuierlich, was alles zusammen mit dem Rührwerk, mit der Zuteilung des Trennmittels, mit der Rührdauer, mit der Sedimentation zeitlich koordiniert, elektrisch bzw. elektronisch gesteuert wird.

Während des Mischens des Abwassers, das in geeigneter Weise über eine Rohrleitung geführt wird, steht der Behälter vorzugsweise still. Nach einer bestimmten Zeitspanne wird das Rührwerk abgestellt, und eine Verweilzeit läuft ab, in der sich Ausflockungen und Sedimente bilden können. Als dann beginnt das Verschwenken des Behälters, und der gesamte Inhalt wird auf das Bandfilter dekantiert. Natürlich kann sowohl während des Mischens des Trennmittels oder mit dem Mischen des Trennmittels und der Reaktionsphase zur Bildung des Sediments bereits die Schwenkphase des Behälters einsetzen oder nach der Mischphase und nach Beginn der Sedimentationsphase, oder dann, wenn die Sedimentationsphase bereits eine Zeitspanne abgelaufen ist u.s.w.

Es ist nunmehr leicht zu erkennen, daß die Zusammenfassung alle Phasen der Klärung des Abwassers in einem Behälter, der Verzicht auf Rohrleitungen, Ventile und dergleichen mehr eine außerordentlich variable, einfach zu wartende Vorrichtung ergibt. Dadurch, daß der Behälter langsam, schrittweise oder kontinuierlich verschwenkt, wenn die Sedimentation beendet oder fast beendet ist, erfolgt eine vorteilhafte getrennte Abgabe von gereinigter Flüssigkeit und Sedimenten. Das über dem Sediment stehende Wasser, welches praktisch frei von Ausflockungen ist, wird auf das Bandfilter dekantiert, wobei sich das Bandfilter nicht zu bewegen braucht. Bei weiterem Verschwenken des Behälters folgt dann Flüssigkeit mit mehr Ausflockungen, und schließlich, wenn der Behälter seine endgültige Verschwenkungsaufstellung erreicht hat, das Sediment, ggf. unter Mitwirkung des Abstreifers, so daß es sich ebenfalls dort auf dem Bandfilter ablagert, wo das praktisch reine Wasser durchgeflossen ist. Es wird also auch das Bandfilter ökonomisch genutzt, und das Sediment lagert sich praktisch auf dem Faservlies des Bandfilters ab.

Das durch das Bandfilter hindurch fließende Wasser sammelt sich in einem darunterliegenden Filtratbehälter und wird in bekannter Weise abgeleitet. Zur Überleitung des aus dem Behälter abdekantierten Wassers auf das Bandfilter ist am Auslaufende des Behälters eine Rinne vorgesehen, die das auftreffende Wasser auf das Bandfilter überleitet. Das Maschinengestell, in dem der Behälter schwenkbar gelagert ist, ist im Bereich des Behälters vorzugsweise mit geschlossenen Wänden versehen. Der Antriebsmotor für den Propeller des Rührwerks liegt oberhalb des Behälters, etwas zum Ausgußende des Behälters hin versetzt. Der Antriebsmotor für die Verschwenkung des Behälters und die Dosiervorrichtung liegen seitlich außerhalb des Bereiches des verschwenkenden Behälters. Die Rohrleitung zur Zuführung des zu reinigenden Wassers kann praktisch dicht neben dem Zuteiler der Dosiervorrichtung für das Trennmittel verlaufen und über ein Winkelstück in den Behälter hinein sich öffnen.

Aufgrund seiner offenen, freiliegenden Bauart kann der Behälter auch sehr einfach ausgetauscht, repariert oder sonstwie gewartet werden, falls das erforderlich ist.

Die Erfindung wird nun anhand eines Ausführungsbeispiels näher erläutert, welches in der Zeichnung dargestellt ist.
- **Fig.1**: stellt eine schematische Seitenansicht der Vorrichtung dar,
- **Fig.2**: eine Draufsicht auf die Vorrichtung nach Fig.1 ,
- **Fig.3**: eine Stirnansicht von der linken Seite der Fig.1 gesehen,
- **Fig.4**: ein Detail in der Draufsicht auf den Behälter und seiner Lagerung im Maschinengestell und
- **Fig.5**: einen Querschnitt durch die Maschine dar.

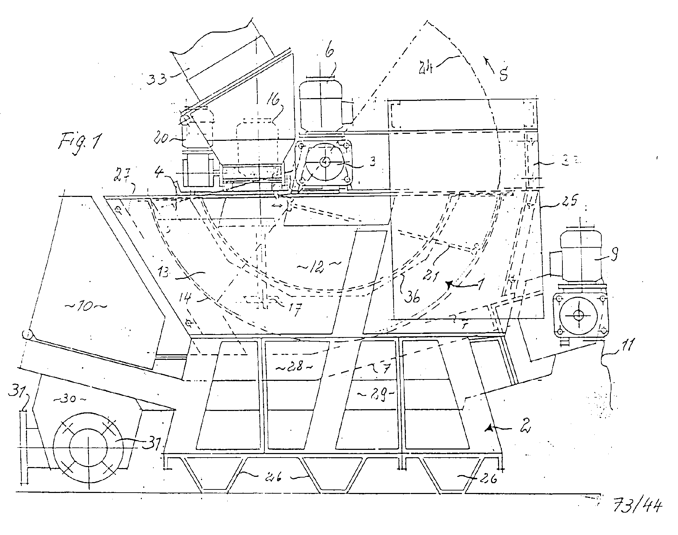

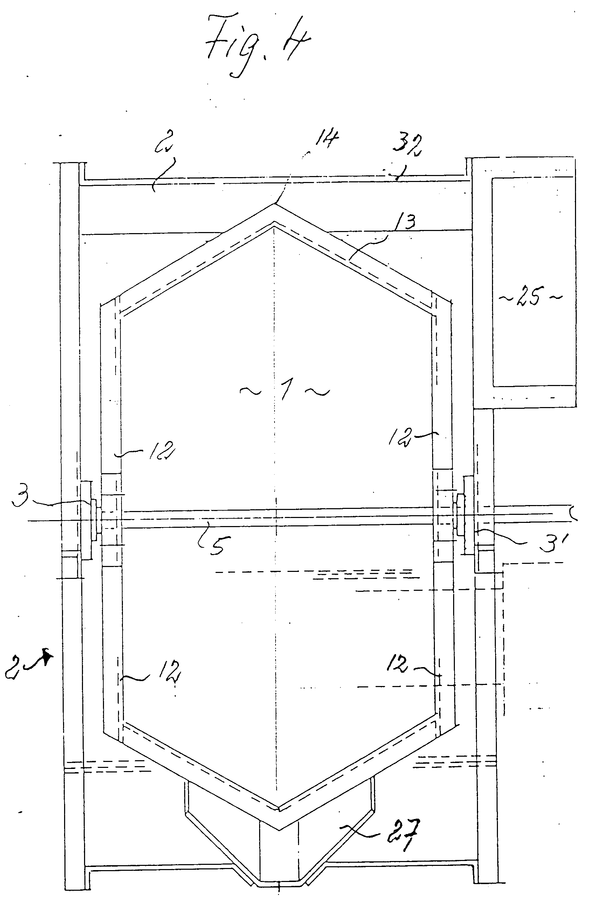

Wie aus der Zeichnung zu ersehen ist, insbesondere aus den Figuren 1 - 3, ist der Behälter 1 in einem kastenförmigen, im wesentlichen rechteckigen Maschinengestell 2 etwa in der Mitte in Lagern 3 und 3' schwenkbar gelagert. Diese Grundgestaltung ist besonders deutlich aus Fig. 4 zu ersehen, die Achse 5 wird von einem regelbaren Motor 6 verdreht bzw. verschwenkt.

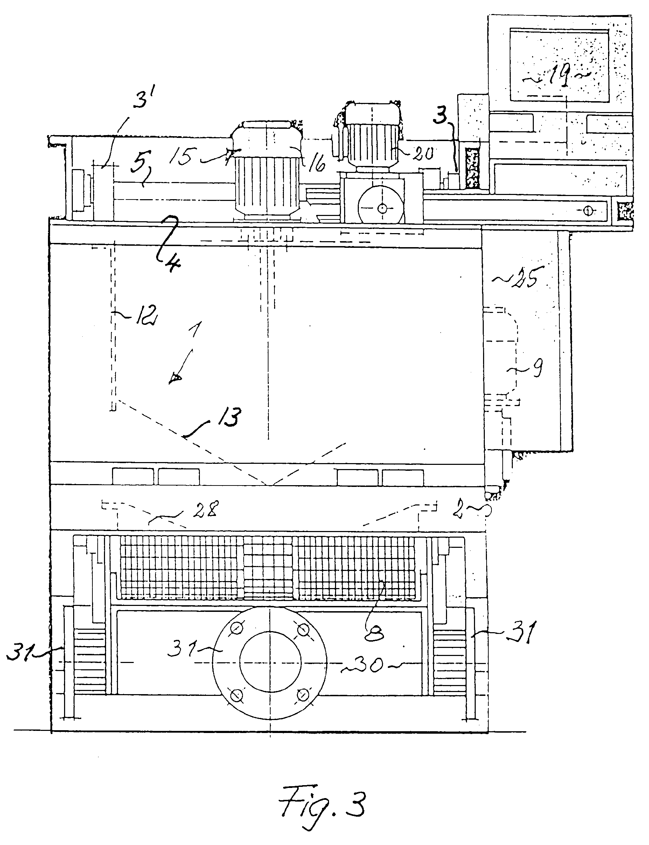

Das Maschinengestell 2 , das einen mehr oder weniger, jedoch mindestens ein an seinen Stirnseiten geschlossener Kasten sein kann, dient ferner zur Aufname eines Bandfilters 28, welcher sich unter Berücksichtigung von Fig.1 von links nach rechts erstreckt, und das durch die gestrichelte Linie 7 angedeutet ist. In Fig. 3, die eine Ansicht der Vorrichtung von links unter Berücksichtigung der Fig. 1 zeigt, ist das das Faservlies tragende Zellenband, welches Teil des Bandfilters ist, erkennbar und zwar dort, wo es um die links liegende Umlenkrolle herumläuft. Angetrieben wird das Zellenband 8 von einem regelbaren Motor 9, der eine Mitnehmerrolle antreibt, um die das Zellenband auf der Antriebsseite herumläuft. Ansonsten wird das Zellenband durch nicht dargestellte Führungsrollen wie üblich geführt. In dem Behälter 10 ist der Vorrat an Faservlies enthalten, der sich mit dem Zellenband unter dem Behälter 1 hindurch bewegt und am Antriebsende, wie bei 11 angedeutet, abgeworfen wird.

Der Behälter 1 ist von halbzylindrischer Gestalt, besitzt also halbkreisförmige Seitenwände 12 und einen V-förmigen, halbzylindrisch gebogenen bzw. gestalteten Boden 13, dessen Scheitel 14 auf der Mitte zwischen den beiden Seitenwänden verläuft.

Oberhalb des Behälters befindet sich auf einer Seite der Schwenkachse 5 ein Rührwerk 15, bestehend aus einem Elektromotor 16 mit einer Welle mit Propeller 17, sowie ein Zuteilschacht 18 einer Dosiervorrichtung 19, mit welcher das Trennmittel in die Flüssigkeit dosiert wird. Das Bezugszeichen 20 bezeichnet den Antriebsmotor für die Dosiervorrichtung 19.

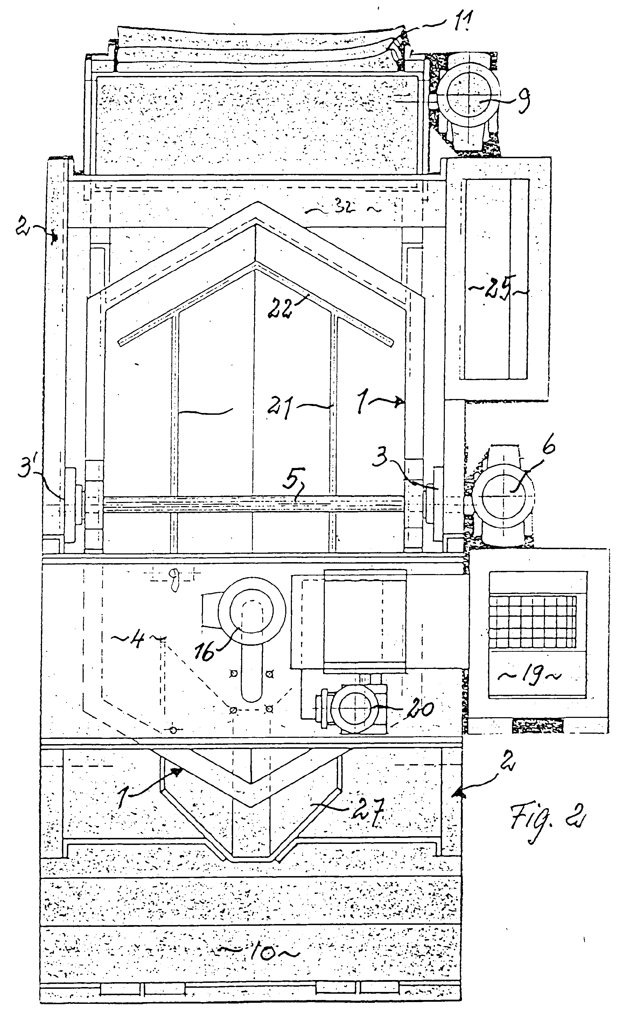

Auf der Traverse 4, die sich über den Behälter hinweg erstreckt und mit dem Maschinengestell 2 verbunden ist und das Rührwerk 15 trägt, ist auf der Unterseite ein Abstreifer 21 verstellbar angeordnet, dessen abstreifendes Teil 22 mit der inneren Oberfläche des V-förmigen Bodens 13 des Behälters 1 in Berührung tritt, um darauf haftendes Sediment abzustreifen, wenn der Behälter durch den Motor 6 in der eingangs beschriebenen Weise verschwenkt wird. Die vordere Kante des Teiles 22 kann mit einer Gummilippe versehen sein, die auf der inneren Oberfläche 23 des Bodens 13 des Behälters 1 entlangstreicht. Die Verschwenkung des Behälters erfolgt in Richtung des Pfeiles S , und in Fig. 1 ist strichpunktiert eine Stellung während des Verschwenkens angedeutet, die mit 24 bezeichnet ist. Das mit dem Bezugszeichen 25 bezeichnete, mit ausgezogenen Linien dargestellte Rechteck ist ein Kasten, der die elektrisch - elektronische Schalt- und Regeleinrichtung zum Betrieb der Vorrichtung enthält. Das Maschinengestell 2 steht auf Trägern 26 und innerhalb des Maschinengestells 2 ist - wie aus Fig. 1 und 2 ersichtlich - auf der Ausgußseite des Behälters 1 eine schrägverlaufende Rinne 27 befestigt, die das aus dem Behälter ausfließende Wasser auf das Bandfilter 28 leitet, auf dem das Sediment zurückbleibt, während das Wasser in einen darunterliegenden Filtratbehälter 29 fließt, das über einen Verteiler 30 mit Rohranschlüssen 31 abgeleitet wird. Das der Ausgußseite des Maschinengestells 2 gegenüberliegende Ende ist durch eine Wand geschlossen, die das Bezugszeichen 32 trägt.

Die Befestigung der Lager, der Motoren, die Halterung des Bandfilters, die Ausgestaltung der Abdeckung 10, unter der sich die Rolle mit dem Vorrat an Faservlies befindet, das auf dem Zellenband 8 liegend durch die Maschine hindurch bewegt wird, folgt üblichen maschinenbaulichen Regeln und Techniken, was natürlich auch gilt für das Maschinengestell 2 und den Bau des schwenkbaren Behälters 1.

Die Zuleitung des Abwassers, welches zur Reinigung in den Behälter 1 hineingebracht wird, ist in der Zeichnung nicht dargestellt, weil diese Zuleitung praktischen, lokalen Gegebenheiten angepaßt wird. Die Leitung kann aber über die Traverse 4 erfolgen und mit ihrer Mündung durch eine Öffnung in der Traverse 4 in den Innenraum des Behälters 1 gerichtet sein.

Die Arbeitsweise der erfindungsgemäßen Vorrichtung gestaltet sich nun wie folgt:
Die Vorrichtung hat zu Beginn ihrer Arbeit die in Fig. 1 gezeigte Stellung, was insbesondere für den Behälter 1 gilt. Diese Darstellung ist durch die gestrichelte Linie 7 angedeutet.

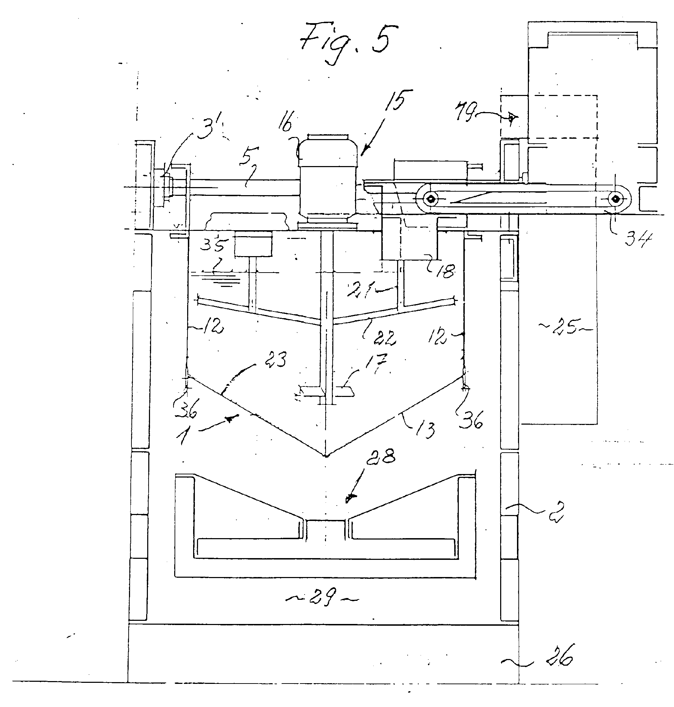

In dieser Stellung, in der der obere Rand des Behälters 1 horizontal liegt, wird eine bestimmte Menge der zu reinigenden Flüssigkeit in den Behälter eingeleitet. Diese Menge richtet sich nach dem Fassungsvermögen des Behälters 1, der je nach Größe der Vorrichtung verschieden sein kann. Sodann wird vermittels der Dosiervorrichtung 19 durch in Gang setzen des Motors 20 eine bestimmte Menge eines Trennmittels aus einem Vorrat 33 durch ein kleines Zellenband 34, welches von dem Motor 20 angetrieben ist, über den Schacht 18 in die Flüssigkeit, die sich ja in dem Behälter 1 befindet, dosiert. Die Flüssigkeit befindet sich beispielsweise auf einem Niveau, das bei 35 in Fig. 5 angedeutet ist.

Nun wird der Motor 16 des Rührwerkes 15 in Gang gesetzt, so daß sich die Welle mit dem Propeller 17 dreht. Dadurch erfolgt für eine bestimmte Zeitspanne eine innige Vermischung des Trennmittels mit der zu reinigenden Flüssigkeit oder dem Abwasser, worauf der Motor 16 abgestellt wird.

Nun schließt sich wieder für eine bestimmte, wählbare Zeitspanne eine Phase an, in der eine chemisch-physikalische Reaktion abläuft, in der die Schadstoffe aus der Flüssigkeit aufgrund der Reaktion mit dem Trennmittel ausflocken und zu sedimentieren beginnen. Am Ende dieser Verweilzeit zur Bildung der Ausflockung und des Sediments wird der Behälter 1 durch Stromzuführung zum Motor 6 langsam in Richtung des Pfeiles S verschwenkt. Durch den Motor 6 wird die Achse 5 gedreht, die in den Lagern 3 und 3' des Maschinengestells 2 lagert und an der der Behälter 1 befestigt ist.

Durch diese langsam vonstatten gehende Schwenkbewegung bewegt sich der Behälter 1 unter der Traverse 4, mit dem Rührwerk 15 und dem Zuteilschacht 18 der Dosiervorrichtung 19 hinweg und durchläuft dabei zum Beispiel die strichpunktierte Stellung, die in Fig. 1 mit dem Bezugszeichen 24 versehen ist. Dabei beginnt zu einem bestimmten Zeitpunkt, die Flüssigkeit aus dem Behälter auszufließen - die klare Flüssigkeit wird quasi vorsichtig dekantiert - und zwar so lange, bis der gesamte Behälter entleert ist. Der Abstreifer 21 gleitet dabei auf der inneren Oberfläche 23 des Bodens 13 entlang und befreit ihn von anhaftendem Sediment.

Das bei der Schwenkbewegung des Behälters 1 ausströmende bzw. dekantierte Wasser fließt gegen die Innenseite der Rinne 27 und von dort aus auf das Bandfilter 28 und schließlich in den Filtratbehälter 29. Das Sediment und auch die noch in der Flüssigkeit schwebenden Flocken werden auf dem Faservlies zurückgehalten, um schließlich mit diesem Faservlies, das am rechten Rand der Fig. 1 austritt - wie bei 11 angedeutet - verworfen zu werden. Nach vollständiger Entleerung des Behälters 1 verschwenkt dieser wieder durch entsprechende Umsteuerung des Motors in seine Ausgangsstellung zurück, und der Vorgang wiederholt sich.

Diese Rückschwenkung des Behälters 1 in die Ausgangsstellung erfolgt vorzugsweise viel schneller als die Schwenkbewegung beim Entleeren des Behälters. Schließlich sei darauf hingewiesen, daß die vieleckige, kreisbogenförmige Linie 36 die Ränder der Seitenwände 12 darstellt, die aus bauökonomischen Gründen nicht kreisbogenförmig geschnitten ist, sondern mehrfach gradlinig, aus der sich eine solche Form ergibt.

## Patentansprüche

1. Transportable Vorrichtung zur Reinigung von Abwässern jedwelcher Art, in der das Abwasser in einem Behälter (1) mit einem als Trennmittel wirkenden chemischen Stoff versetzt und innig vermischt wird, worauf der sich bildende Niederschlag über ein Bandfilter (28) abgetrennt und das Filtrat gesammelt wird, **dadurch gekennzeichnet**, daß der Behälter (1) oberhalb des Bandfilters (28) an einer quer im Maschinengestell (2) der Vorrichtung gelagerten und verschwenkbaren Achse (5) befestigt ist.

2. Vorrichtung nach Anspruch 1 **dadurch gekennzeichnet**, daß der Behälter (1) halbzylindrische Gestalt hat und die Achse (5), an der er befestigt ist, motorisch verschwenkbar bzw. gedreht wird.

3. Vorrichtung nach Anspruch 1 und 2 **dadurch gekennzeichnet**, daß in dem Maschinengestell (2) unterhalb des verschwenkbaren Behälters (1) ein Bandfilter (28) angeordnet ist, und das die beim Verschwenken des Behälters (1) ausfließende Flüssigkeit über eine Rinne (27) auf das Bandfilter (28) strömt.

4. Vorrichtung nach Anspruch 1 - 3 **dadurch gekennzeichnet**, daß das Verschwenken des Behälters (1) über einen Motor (6) mit Getriebe regelbar, kontinuierlich oder schrittweise erfolgt.

5. Vorrichtung nach Anspruch 1 - 4 **dadurch gekennzeichnet**, daß der Boden (13) des Behälters (1) V-förmige Gestalt hat.

6. Vorrichtung nach Anspruch 1 - 5 **dadurch gekennzeichnet**, daß oberhalb des Endes des Behälters (1), über das das Ausfließen der Flüssigkeit beim Verschwenken des Behälters erfolgt, eine Traverse (4) angeordnet ist, auf der der Zuteilschacht (18) einer Dosiervorrichtung (19) und ein Rührwerk (15) mit Motor (6) und Propeller (17) befestigt sind.

7. Vorrichtung nach Anspruch 1 - 6 **dadurch gekennzeichnet**, daß in den halbzylindrischen Behälter (1) ein Abstreifer (21) hineinragt, der mit seinem abstreifenden Teil (22) auf der inneren Oberfläche (23) des Bodens (13) des Behälters (1) aufliegt.

## Claims

1. Mobile device for the purification of waste waters of all types, in which the waste water in a vessel (1) receives an addition of a chemical substance acting as a separating agent and is intimately mixed, whereupon the resultant precipitate is separated by a band filter (28) and the filtrate is collected, characterized in that the vessel (1) is mounted above the band filter (28) on a pivotal shaft (5) journalled transversely in the machine frame (2) of the device.

2. Device according to Claim 1, characterized in that the vessel (1) has a semicylindrical form and the shaft (5) to which it is secured is pivoted or rotated by motor.

3. Device according to Claim 1 and 2, characterized in that a band filter (28) is disposed in the machine frame (2) beneath the pivotal vessel (1), and that the liquid which flows out when the vessel (1) is tilted flows through a gutter (27) onto the band filter (28).

4. Device according to Claims 1 to 3, characterized in that the pivoting of the vessel (1) is performed, continuously or intermittently, by a motor (6) and controllable by a gear.

5. Device according to Claims 1 to 4, characterized in that the bottom (13) of the vessel (1) has a V-shape.

6. Device according to Claims 1 to 5, characterized in that, above the end of the vessel (1) through which the outflow of liquid takes place when the vessel is pivoted, a cross-beam (4) is disposed, on which the feed shaft (18) of a metering device (19) and an agitator (15) with motor (6) and propellor (17) are fixed.

7. Device according to Claims 1 to 6, characterized in that a stripper (21) penetrates into the semicylindrical vessel (1), which stripper bears, with its stripping portion (22), on the inner surface (23) of the bottom (13) of the vessel (1).

## Revendications

1. Dispositif transportable pour purifier les eaux résiduaires de toute nature, dans lequel les eaux résiduaires sont mises en réaction dans un récipient (1) avec une substance chimique jouant le rôle d'agent de séparation et sont mélangées intimement avec celle-ci, avec formation d'un précipité qui est séparé sur un filtre à bande (28), tandis que le filtrat est récolté, caractérisé en ce que le récipient (1) est supporté au-dessus du filtre à bande (28) sur un châssis de machine (2) du dispositif et est fixé à un arbre pivotant (5).

2. Dispositif selon la revendication 1, caractérisé en ce que le récipient (1) a une forme semi-cylindrique et que l'axe (5) auquel il est fixé peut être mis en rotation ou pivoter sous l'action d'un moteur.

3. Dispositif selon les revendications 1 et 2, caractérisé en ce qu'un filtre à bande (28) est disposé dans le châssis de machine (2) en dessous du récipient pivotant (1) et que le liquide s'écoulant par une rigole (27) au cours du pivotement du récipient (1) s'écoule sur le filtre à bande (28).

4. Dispositif selon les revendications 1 à 3, caractérisé en ce que le pivotement du récipient (1) s'effectue au moyen d'un moteur (6) avec transmission d'une manière réglable en continu ou en discontinu.

5. Dispositif selon les revendications 1 à 4, caractérisé en ce que le fond (13) du récipient (1) a une forme en V.

6. Dispositif selon les revendications 1 à 5, caractérisé en ce que, au-dessus de l'extrémité du récipient (1), par dessus laquelle a lieu l'écoulement du liquide pendant le pivotement du récipient, se trouve une traverse (4) sur laquelle sont fixés le puits d'alimentation (18) d'un dispositif de dosage (19) et un agitateur (15) avec un moteur (6) et une hélice (17).

7. Dispositif selon les revendications 1 à 6, caractérisé en ce que, dans le récipient semi-cylindrique (1), pénètre un racleur (21) qui repose par son élément racleur (22) sur la face intérieure (23) du fond (13) du récipient (1).
